# EUROPEAN PATENT SPECIFICATION

(11) **EP 1 906 770 B1**
(45) Date of publication and mention of the grant of the patent: **21.12.2011**
(21) Application number: 06766017.5
(22) Date of filing: 06.07.2006
(51) Int. Cl.: A23L 1/314, A23L 1/22, A47J 43/18

(54) **FLAVOURED SKEWER**
AROMATISIERTER SPIESS
BROCHE AROMATISEE

(30) Priority: 14.07.2005 US 698947 P
(43) Date of publication of application: 09.04.2008
(73) Proprietor: FIRMENICH SA, 1211 Geneva 8 (CH)
(72) Inventor: MUNT, Howard, Lawrenceville, NJ 08648 (US); LU, Debbie, Kendall Park, NJ 08824 (US); WIGGINS, Audrey, Eastampton, NJ 08060 (US)
(74) Representative: Dale, Gavin Christopher
(86) International application number: PCT/IB2006/052276
(87) International publication number: WO 2007/007243

(56) References cited:
- WO-A-2005/067733
- FR-A1- 2 445 113
- US-A- 2 116 310
- US-A- 4 061 783
- US-A- 5 922 377

## Description

### Technical Field

The present invention relates to skewers comprising a coating with flavours. The invention further relates to a method for preparing a skewer and to a method for flavouring foods prepared by barbecuing, grilling, frying, broiling, griddling and/or roasting. The invention also relates to the use of skewers for flavouring food.

### Background of the Invention

Foods such as meat, fish, shellfish and vegetables often have flavour added to them by seasoning or marinating. In the process of marinating, a sauce containing flavour or seasoning is prepared and the food is then brought into contact with the sauce over a prolonged time, allowing the flavours to diffuse from the surface to the interior of the food.

One drawback of this way of marinating is the time lost for preparing a marinade or seasoning and marinating or coating the food. With some marinades, this may require several hours or more for the flavour to permeate the food, which does not fit well with the concept of spontaneous barbecuing in the open air.

Another drawback is that the flavours are applied from the outer surface of a given piece of food only, which may result in burning, flaring and/or evaporating during cooking.

A different method of flavouring solid foods is given in US-A-2,116,310 where a skewer is coated with flavour and then inserted into meat. To apply the flavouring, the skewers are simply steeped in a flavouring solution. The disadvantage is that desirable volatile flavours will often be lost prior to insertion of the skewer into the meat.

In US-A-5,922,377, a rod for flavouring food has flavouring means, such as dried spices, herbs or vegetables on its surface and a binder consisting essentially of partially hydrogenated cotton seed oil, partially hydrogenated soybean oil and soybean lecithin for releasably binding the flavouring means to the rod. This is a complicated system and is limited insofar as the binder is not suitable for binding liquid flavours.

It is an object of the present invention to address one or more of the problems and/or to provide one or more of the benefits above.

### Summary of the Invention

Accordingly, the present invention provides a skewer for flavouring solid foods comprising a coating on at least a portion of the outer surface of the skewer, whereby the coating comprises an encapsulated flavour.

The present invention also provides a method for preparing a skewer, the method comprising the step of applying a coating comprising an encapsulated flavour to at least a portion of the outer surface of the skewer.

According to another aspect, the present invention provides the use of a skewer comprising a coating on at least a portion of the outer surface of the skewer for flavouring food, wherein the coating comprises an encapsulated flavour.

### Detailed Description of the Invention

The term "skewer" in the context of the present invention, means any utensil which is suitable for piercing solid food. Typically, a skewer is in the form of a rod, a pin, a pick, a spit, a stick or the like. The skewer will typically comprise a single rod though skewers comprising more than one rod are also within the scope of the invention. The skewer of the invention is suitable to skewer all kinds of solid food. Preferably, the phrase "solid food" denotes any food which is capable of being carried on a skewer. The skewer of the present invention may be made of any suitable material or of combinations of different materials. Examples include wood, plastic, metal, porcelain and glass. Preferably, it is made of wood. Generally, the skewer of the present invention is not limited by its size, but preferably has a length in the range of 5 to 100cm, more preferably 10 to 50cm. The diameter of the skewer is preferably in the range of 0.8mm to 15mm, more preferably 1.5 to 9mm.

The skewer of the invention may have any suitable cross-section, e.g. a circular, oval or rectangular cross-section.

The term "flavour" encompasses compounds, ingredients and/or compositions, which are used alone or in combination with other compounds, to impart a desired gustative effect, in particular to a food product and/or a beverage. To be considered as a flavour, it must be recognized by a person skilled in the art as being able to modify in a desired way the taste of a composition. Such compositions are intended for oral consumption and are hence often foods, nutritional compositions and the like.

The textbook "Perfume and Flavour Chemicals" Steffen Arctander, published by the author, 1969, is a collection of perfumes and flavours known to the skilled person . The molecules of this textbook and its later editions are suitable for being used as flavours in the present invention. The term flavour also includes compounds that are perceived by mediation of the trigeminal nerve, such as cooling, salivating, pungent and tingling compounds, for example.

The coating used in the present invention may be fat-based, water-based or may be present in the form of an emulsion. If the coating is fat-based, the fat or mixture of fats used for the coating is preferably solid at room temperature. In a preferred embodiment of the invention, the coating is water-based. A water-based coating is defined as a coating which, during its preparation comprises at least 10wt.%, preferably at least 20wt.%, more preferably at least 30wt.% and most preferably at least 50wt.% of water, based on the total weight of the coating. It is worthwhile noting that when the coating is on the skewer, the water preferably evaporates and is no longer detectable in substantial amounts on the skewer.

In a preferred embodiment, the coating on the skewer comprises a film-forming material. A film-forming material, for the purpose of the present invention, is a material that is capable of increasing the adherence of a liquid to the skewer. Therefore, depending on the material of the skewer, a film-forming material may be selected that is capable of attaching flavours to the skewer. The skilled person is capable of selecting suitable film forming materials, which may be selected from may different kinds of subject matter,

such as proteins, carbohydrates and other, generally polymeric, ingredients. Preferably, the film-forming material is a water-soluble carbohydrate, more preferably a water-soluble oligo- and/or polysaccharide. The term "water soluble carbohydrate" means that the carbohydrate is at least 50% soluble according to the method described by L. Prosky et al., J. Assoc. Off. Anal. Chem. 71, 1017-1023 (1988).

Suitable film-forming materials may be selected amongst gums, such as pullulan gum, gum arabic, locust bean gum, carrageenan, guar gum, gum acacia, gum tragacanth, gum ghatti, karaya gum, xanthan, agar, furcellaran and Danish agar.

Other film-forming materials may be used. Examples are such as alginate with or without calcium or sodium, pectin or mixtures of different pectins with all grades of methoxylation, methylcellulose, hydroxypropylcellulose, carboxymethylcellulose, guaran gum, starches and modified starches, amylose, amylopectin, propyleneglycol alginate, propyleneglycol, tamarind flour, arabinogalactan, scleroglucan and polyvinylpyrrolidon (PVP).

All ingredients may be used alone or in combination with other ingredients having the same or similar functions.

The flavours are encapsulated. The encapsulation of flavours is particularly advantageous in the context of the present invention, in order to prevent preliminary loss of generally volatile flavour compounds by evaporation from the coating on the skewer. The present inventors surprisingly found that by coating the skewer with a coating comprising encapsulated flavours, the flavours are retained on the skewer until food is skewered onto it followed by preparation in the presence of heat or moisture. In this way, all the flavours used in the coating will diffuse and/or move into the food from the inside of the food. Encapsulated flavours provide further important advantages since the flavours are retained in the capsules on the skewer and are not lost through evaporation. This is of particular importance in case the skewer has to be dried, for example after applying the coating onto it. Additionally, the flavours have a longer shelf-life than non-encapsulated flavours. A further advantage is that encapsulation allows for both solid and liquid flavours to be used in the present invention thus giving a greater choice of flavours from which to select.

The flavours may be encapsulated by any method known in the art, but according to a preferred embodiment, the flavours are encapsulated in capsules selected from the group consisting of spray-dried capsules, extruded capsules, spray-granulated capsules, spray-coated (with fat or wax, for example) capsules, spray-agglomerated capsules, coacervates, core-shell capsules made by prilling, cyclodextrin encapsulated flavours, i.e. by molecular inclusion, In Situ Micro Encapsulation or ISME, and yeast based capsules.

Preferably, the flavours of the present invention are encapsulated in microcapsules. Microcapsules are defined, for the purpose of the present invention, as capsules having a arithmetic mean diameter in the range of 600 nm to 500 µm.

In a preferred embodiment, the flavours are encapsulated in a micro-organism, preferably yeast cells. Microencapsulation of flavours in yeast cells is disclosed in the literature, Bishop JRP, Nelso G, Lamb J "Microencapsulation in yeast cells", Microencapsulation, 1998, vol. 15, no. 6, 761-73. See also CA 2470351 and EP 0528466 and EP A2 0242135.

The flavours may be encapsulated in a micro-organism as follows. In a first step, the micro-organism is mixed with water to produce an aqueous mixture comprising a suspension of 10-30wt.% solids. Emulsifiers, surfactants and/or stabilizers are optionally added to the aqueous liquid. The flavour, which is preferably hydrophobic, is then added to the mixture.

The mixtures can be in the form of a suspension, a slurry, an emulsion, or a dispersion. An emulsion is preferred. Preferably the emulsion is simply maintained by agitation.

Preferably, the dry-weight ratio of micro-organism to flavour in the mixture is in the range of 1:1 to 5:1, preferably 1.4:1 to 4:1, more preferably 1.6:1 1 to 3:1.

The mixture is then mixed, stirred or agitated for 1 to 6, preferably 1.5 to 5 hours, preferably at above-ambient temperatures, such as above 35°C, or even above 40°C.

During the mixing step, at least part of the flavour may diffuse into the cell of the micro-organism.

Following the more or less complete diffusion of the flavour into the cells of the micro-organism, the encapsulated micro-organisms may be dried. Examples of suitable drying techniques include spray drying, freeze drying, fluidized bed drying and/or oven drying. Spray drying is preferred.

Alternatively, further dry-matter, hereinafter referred to as matrix material, may be added prior to drying. Matrix material may be selected from carbohydrates and proteins, for example. Preferably, water-soluble matrix materials are used. Preferably, the matrix material is a starch or starch derived product, such as hydrolyzed or otherwise chemically modified starch. Preferably, the matrix material is maltodextrin.

Preferably, 0.6 to 2 parts of matrix material are added for every part of micro-organism added earlier in dried form.

After adding the matrix component to the aqueous liquid, all components are preferably mixed again, for example by using a high shear mixer, in order to ensure proper homogenisation. Then, the resulting mixture is dried, and, if desired (depending on the drying technology applied) granulated.

Encapsulation of flavours in micro-organisms according to the above process are disclosed in co-pending applications WO-A-2005/067733 and WO-A-2006/006003.

The method for preparing the skewer of the invention comprises the step of applying a coating comprising the encapsulated flavour to the skewer.

The coating may be applied in any way onto the skewer. For example, the coating may be applied simply by dipping a commercially available skewer into a liquid comprising the encapsulated flavours, the liquid adhering at least to some extent to the skewer. Alternatively, the coating liquid may be sprayed on or applied with a brush.

In one aspect, the method of preparing a skewer further comprises the step of preparing a coating by dissolving and/or suspending the encapsulated flavours in a liquid. Accordingly, water, oils/fats or other lipids such as waxes, or emulsions may be used as liquids. Preferably the liquid is aqueous.

In a preferred embodiment, the coating is prepared by further adding a film forming material to the liquid.

Preferably, encapsulated flavours, usually in the form of powdered compositions or granulates, are added to a liquid for preparing a coating for the purpose of the present invention. For example, the capsules may be entrapped in capsules having an arithmetic mean diameter of about 500 nm to about 1000 µm, more preferably 700nm to 700 µm, most preferably, 800nm to 500 µm. Accordingly, the capsules are preferably microcapsules, being defined as capsules having a mean diameter of 600 nm to 500 µm.

The encapsulated flavours are preferably added to the liquid at 0.1-35%, more preferably 5-25% of capsules, based on the total weight of the liquid. In these percentages, the total weight of capsules including pure flavours is referred to.

Where a film-forming material is added to the liquid, it may be present in an amount of from 90-1% of film forming material in percent by weight of the sum of liquid and film forming material together.

A water-based coating may be prepared by mixing 10-99wt.% water and 90-1wt% of a film-forming material. More preferably, the water based-coating comprises 50-90wt.% water and 10-50wt.% film-forming material. Most preferably, the coating comprises 70-85wt.% water and 15-30wt.% film-former.

The coating preferably comprises further food ingredients. Examples of further food ingredients that are beneficially used in the coating include spices, NaCl and/or other salt-tasting ingredients, chili powders, acids, phosphates, herb powders and taste enhancers. Of course, these ingredients may also be present in encapsulated form. These additives are not considered for calculating the percentages given in the present description, as they are used at the discretion of the skilled person.

Further additives may be added to the coating, such as solvents, emulsifiers, stabilizers and preservatives. Similarly, these additives are not considered for calculating the percentages given in the present description.

Once the coating is applied to the skewer, the skewers may be dried, for example at room temperature (25°C) or at higher temperatures, if necessary. Drying is preferred if water is used to prepare the coating.

The food skewered on the skewer of the invention may be cooked, eaten in the raw state, marinated (for example with an acid) or smoked, for example, before consumption. For example, fish and other protein-rich food may be eaten in the raw state or treated with an acid (vinegar, citrus juice, wine, etc) to denature proteins. Such food may also be skewered on the skewer of the invention and the flavours of the coating will contribute to the flavour impact of the food. Preferably, the food is cooked. Preferably, the method of flavouring food further comprises the step of cooking the food by barbecuing, grilling, frying, broiling, griddling and/or roasting.

The food may be cooked immediately afterwards or after waiting for some time, for example 1 min to 12 hours. Of course, marinated/seasoned food may be skewered also, in order to apply flavours from the inside and the outside of the food.

### Brief Description of The Drawings

Figure 1 shows a comparison of flavour quantity of grilled chicken flavoured at iso-load by way of a TIC (Total Ion Chromatogram) of volatiles present in breath during eating.
Figure 2 shows maximum intensity of a specific flavour compound (Citral) in the breath of two panelists during eating.

### Examples

The following examples are intended to illustrate the invention without limiting the scope as a result. Percentages or parts are expressed by weight, unless otherwise indicated.

### Example 1

### Encapsulation of Flavours

A commercially available flavour solution was encapsulated in micro-organisms according to the following procedure:
100 g spray-dried yeast (DHW, Germany) was dispersed in 375 g water. 75g of a lemon flavour composition (ex Firmenich SA, Switzerland) was added and the mixture maintained for 4 hours at 50°C under constant agitation at 150 rpm in a blade stirrer.

Thereafter, 150 g of maltodextrin (DE 18) was added and mixed until the total aqueous mixture was homogenous.

The mixture was then spray dried on a Niro mobile minor® at 210°C inlet and 90°C outlet temperature at a feed rate of 10 ml/minute. A powder of microcapsules based on a micro-organism, a matrix component and at least one flavour was obtained. The resulting flavour capsules comprised 40wt.% yeast, 40wt.% maltodextrin and 20wt.% liquid flavour.

The same procedure was repeated with the same amount of a pepper flavour (black pepper oil). The yeast-encapsulated flavours prepared according to the present example are commercially available from Firmenich SA, Switzerland under product numbers 885007 TTB0440 and 885009 TTB0440.

### Example 2

### Preparation of Skewer with Flavoured Coating

A coating was prepared in the form of an adhesive edible film.

| | |
|---|---|
| Hot Water | 79.16 % |
| *Pullalan Gum PI 20 | 19.80 % |
| Glycerin | 0.99 % |
| #Tween 80 | 0.05 % |

| | |
|---|---|
| * ex Hayashibara Company, LTD # Polyoxyethylene(20)sorbitan monooleate | |

In a clear glass beaker, glycerine and tween 80 were blended together. Hot water (80°C) was added to the beaker and mixed thoroughly. Pullulan gum was slowly added into the water and stirred until all of it had dissolved. A clear and very viscous liquid was obtained.

The microcapsules obtained in example 1 were added to the viscous coating at 19% by weight, based on the total weight of viscous liquid and microcapsules.

The coating was manually smeared onto the skewer with a fingertip. Once the skewer was evenly coated, it was left to air dry for 12 hours or until the adhesive (coating) hardened.

### Example 3

### Preparation of Flavoured Food and Sensory Analysis

Flavour compositions were applied to chicken in four different ways for comparative study. After cooking on the grill for 2-3 minutes at 165°F (73.8°C), the cooked chicken was evaluated sensorially and instrumentally.

Pieces of chicken (50g) were flavoured at iso-active levels of lemon and pepper flavours (see example 1). Flavours were present in encapsulated form (example 1) and in liquid form (commercially available). Flavours were applied to sticks according to the procedure in example 2, using microencapsulated or liquid flavours directly. Furthermore, flavours were applied to the surface of the chicken in the form of a marinade based on corn oil and either encapsulated or liquid flavour. The flavour compositions applied at iso-load to each piece of chicken and the way of application is given below:
A) Yeast-encapsulated flavours in coating on skewer at 0.5g of coating per stick. The surface of the chicken was rubbed with 3g oil and 0.3g salt. The coating was prepared by mixing the following components:

| | Wt.% |
|---|---|
| Viscous coating⁽¹⁾ | 70.42 |
| Microcapsules with lemon flavour⁽²⁾ | 19.01 |
| Citric acid | 3.53 |
| Microcapsules with black pepper oil⁽²⁾ | 7.04 |

| | |
|---|---|
| (1) preparation see example 2 (2) see example 1 | |

B) Liquid flavours in coating on skewer at 0.5g per stick. The surface of the chicken was rubbed with 3 g oil and 0.3g salt. The coating was prepared by mixing the following components:

| | Wt.% |
|---|---|
| Viscous coating⁽¹⁾ | 91.27 |
| Liquid lemon flavour⁽³⁾ | 3.80 |
| Citric acid | 3.53 |
| Black pepper oil⁽³⁾ | 1.40 |

| | |
|---|---|
| 3) source of liquid flavours as given in example 1 | |

C) Marinade on surface of chicken with yeast-encapsulated flavours at 3.447g of marinade put on the surface. The marinade was prepared by mixing the following components:

| | Wt.% |
|---|---|
| Corn Oil | 87.047 |
| Salt | 8.700 |
| Microcapsules with lemon flavour⁽²⁾ | 2.750 |
| Citric acid | 0.493 |
| Microcapsules with black pepper oil⁽²⁾ | 1.010 |

D) Marinade on surface of chicken with liquid flavours at 0.343g of marinade put on the surface. The marinade was prepared by mixing the following components:

| | Wt.% |
|---|---|
| Corn Oil | 89.745 |
| Salt | 8.970 |
| Liquid lemon flavour⁽³⁾ | 0.568 |
| Citric Acid | 0.508 |
| Black Pepper oil⁽³⁾ | 0.209 |

All samples (A, B, C, D) were tasted three times by two panelists. The panelists found that flavours applied as coating on the skewer before grilling produced the most intense flavours.

APCI-MS (Atmospheric Pressure Chemical Ionization Mass Spectrometry) as disclosed in US 5,869,344 was used for instrumental evaluation. This equipment measures the content of total or specific volatiles present in breath exhaled through the nose by way of a breathing tube, which is in communication with the nostril of a panelist. Briefly, the quantity (intensity) of ionized volatiles may be determined for compounds characterized by their molecular weight by guiding breath of the nasal cavity containing a complex mixture of volatiles to a mass spectrometer (MS). The measurement takes place during eating.

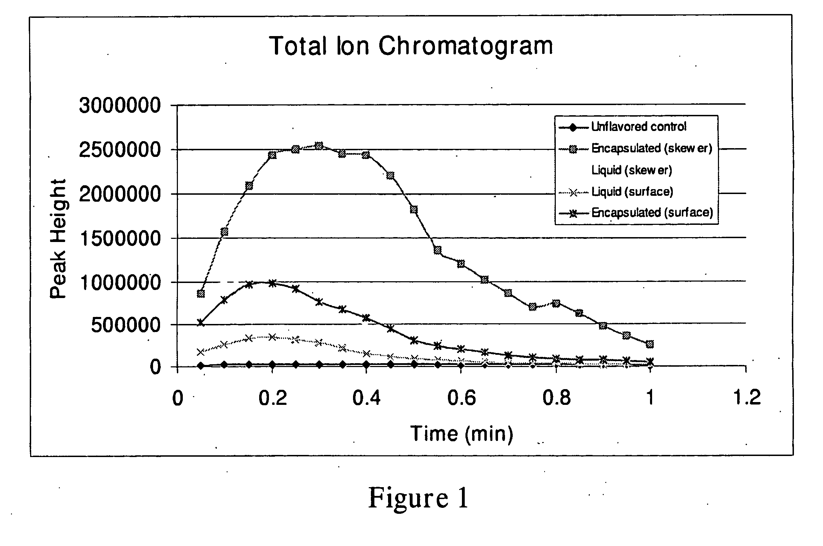

The results in Figure 1 show that encapsulated flavours coated on the skewer produced the highest content of volatiles over time. Encapsulated flavours applied as marinades and liquid flavours coated onto the skewer performed equally well, while with liquid flavours used in the marinade only very low levels of volatiles were detected.

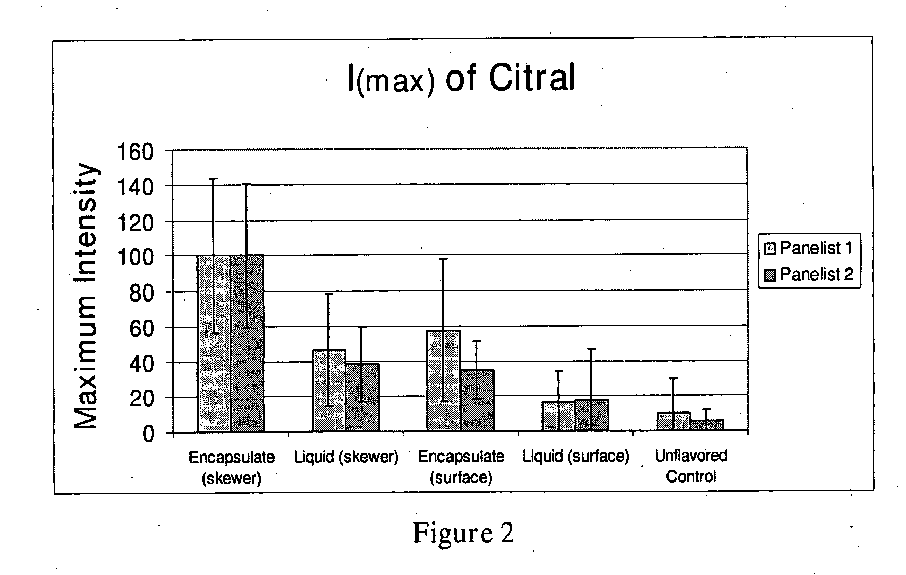

Figure 2 shows the normalized maximum intensity value (I_{MAX}) obtained for a specific compound in the lemon flavour composition used in the samples, Citral, for both panelists. The values in Figure 2 are calculated based on the mean of three individual measurements. Given differences depending on panelists, the data were normalized to identical highest values (at 100) for both panelists, thus only showing sample (A, B, C, D)-related effects. While the maximum Intensity was measured for a number of volatiles present in the lemon flavour composition, Citral was selected arbitrarily for Figure 2. Other volatiles showed a similar or identical pattern and are, therefore, not displayed here.

Figure 2 confirms the above results, in that the encapsulated flavour compound Citral produced highest intensity during consumption when it was present in the coating of a skewer. This was true for both panelists. Again, liquid flavours in the coating of the skewers and encapsulated flavours used in the marinade performed second best, while lowest intensity was measured when liquid flavour was used in marinades.

Surprisingly, food grilled on a skewer comprising a coating with flavour resulted in higher flavour intensity than food, which was marinated with the same amount of flavour.

## Claims

1. A skewer for flavoring solid foods comprising a coating on at least a portion of the outer surface of the skewer, wherein the coating comprises an encapsulated flavor.

2. The skewer according to claim 1, wherein the flavor is present in the coating in an amount sufficient to flavor pieces of meat, chicken, seafood and/or vegetables during barbecuing, grilling, frying, and/or roasting.

3. The skewer according to either claim 1 or claim 2, wherein the flavor is encapsulated in capsules selected from the group consisting of spray-dried capsules, extruded capsules, spray-granulated capsules, spray-agglomerated capsules, coacervates, core-shell capsules made by prilling, cyclodextrin encapsulated flavors i.e. by molecular inclusion, In Situ Micro Encapsulation or ISME, and yeast based capsules.

4. The skewer according to any one of the preceding claims, wherein the flavor is encapsulated in a micro-organism.

5. The skewer according to any one of the preceding claims, wherein the coating further comprises a film forming material.

6. The skewer according to any one of the preceding claims, wherein the coating is water-based.

7. A method for preparing a skewer, the method comprising the step of applying a coating comprising an encapsulated flavor to at least a portion of the outer surface of the skewer.

8. The method according to claim 7, wherein the coating is prepared by the step of dissolving and/or suspending a flavor in a liquid.

9. The method according to claim 8, wherein the coating is prepared by further adding a film-forming material to the liquid.

10. Use of a skewer comprising a coating on at least a portion of the outer surface of the skewer for flavoring food, wherein the coating comprises an encapsulated flavour.

## Patentansprüche

1. Spieß zum Aromatisieren fester Nahrungsmittel, umfassend eine Beschichtung auf zumindest einem Teil der äußeren Oberfläche des Spießes, wobei die Beschichtung einen verkapselten Aromastoff umfaßt.

2. Spieß gemäß Anspruch 1, wobei der Aromastoff in der Beschichtung in einer Menge, ausreichend, um Stücke von Fleisch, Hühnerfleisch, Meeresfrüchten und/oder Gemüse während des Barbecue, Grillens, Frittierens und/oder Röstens zu aromatisieren, vorhanden ist.

3. Spieß gemäß entweder Anspruch 1 oder Anspruch 2, wobei der Aromastoff in Kapseln, ausgewählt aus der Gruppe, bestehend aus sprühgetrockneten Kapseln, extrudierten Kapseln, sprühgranulierten Kapseln, sprühagglomerierten Kapseln, Koazervaten, Kern-Schale-Kapseln, hergestellt durch Prillen, mit Cyclodextrin, d.h. durch molekularen Einschluß, in-situ-Mikroverkapselung oder ISME verkapselten Aromastoffen und auf Hefe basierenden Kapseln, verkapselt ist.

4. Spieß gemäß einem der vorhergehenden Ansprüche, wobei der Aromastoff in einem Mikroorganismus verkapselt ist.

5. Spieß gemäß einem der vorhergehenden Ansprüche, wobei die Beschichtung weiterhin ein filmerzeugendes Material umfaßt.

6. Spieß gemäß einem der vorhergehenden Ansprüche, wobei die Beschichtung auf Wasser basiert.

7. Verfahren zum Herstellen eines Spießes, wobei das Verfahren den Schritt umfaßt, eine Beschichtung, umfassend einen verkapselten Aromastoff, auf zumindest einen Teil der äußeren Oberfläche des Spießes aufzubringen.

8. Verfahren gemäß Anspruch 7, wobei die Beschichtung durch den Schritt hergestellt wird, einen Aromastoff in einer Flüssigkeit zu lösen und/oder zu suspendieren,

9. Verfahren gemäß Anspruch 8, wobei die Beschichtung hergestellt wird, indem weiterhin ein filmerzeugendes Material zu der Flüssigkeit hinzugefügt wird.

10. Verwendung eines Spießes, umfassend eine Beschichtung auf zumindest einem Teil der äußeren Oberfläche des Spießes, zum Aromatisieren von Nahrung, wobei die Beschichtung einen verkapselten Aromastoff umfaßt.

## Revendications

1. Brochette pour aromatiser des aliments solides comprenant un revêtement sur au moins une partie de la surface extérieure de la brochette, dans laquelle le revêtement comprend un arôme encapsulé.

2. Brochette selon la revendication 1, dans laquelle l'arôme est présent dans le revêtement en une quantité suffisante pour aromatiser des morceaux de viande, de poulet, de fruits de mer et/ou de légumes pendant leur cuisson au barbecue, en grillades, pendant qu'ils sont frits et/ou rôtis.

3. Brochette selon la revendication 1 ou la revendication 2, dans laquelle l'arôme est encapsulé dans des capsules choisies dans le groupe constitué des capsules séchées par atomisation, des capsules extrudées, des capsules granulées par atomisation, des capsules agglomérées par atomisation, des coacervats, des capsules à noyau et enveloppe fabriquées par grelonage, des arômes encapsulés dans des cyclodextrines, c'est-à-dire par inclusion moléculaire, microencapsulation in situ ou ISME, et des capsules à base de levure.

4. Brochette selon l'une quelconque des revendications précédentes, dans laquelle l'arôme est encapsulé dans un micro-organisme.

5. Brochette selon l'une quelconque des revendications précédentes, dans laquelle le revêtement comprend en outre un matériau filmogène.

6. Brochette selon l'une quelconque des revendications précédentes, dans laquelle le revêtement est à base aqueuse.

7. Procédé de préparation d'une brochette, ledit procédé comprenant l'étape consistant à appliquer un revêtement comprenant un arôme encapsulé sur au moins une partie de la surface extérieure de la brochette.

8. Procédé selon la revendication 7, dans lequel le revêtement est préparé par l'étape consistant à dissoudre et/ou mettre en suspension un arôme dans un liquide.

9. Procédé selon la revendication 8, dans lequel le revêtement est préparé par ajout supplémentaire d'un matériau filmogène au liquide.

10. Utilisation d'une brochette comprenant un revêtement sur au moins une partie de la surface extérieure de la brochette pour aromatiser un aliment, dans laquelle le revêtement comprend un arôme encapsulé.
